# EUROPEAN PATENT SPECIFICATION

(11) **EP 0 985 321 B1**
(45) Date of publication and mention of the grant of the patent: **05.10.2005**
(21) Application number: 98922972.9
(22) Date of filing: 26.05.1998
(51) Int. Cl.: H04Q 3/00, H04M 15/08

(54) **TELEPHONE SYSTEM WITH ALLOCATION OF FREEPHONE NUMBER**
TELEFONANORDNUNG MIT ZUTEILUNG VON GEBÜHRENFREIER NUMMER
RESEAU TELEPHONIQUE AVEC POSSIBILITE D'AFFECTATION DE NUMERO LIBRE APPEL

(30) Priority: 30.05.1997 GB 9711204
(43) Date of publication of application: 15.03.2000
(73) Proprietor: INTELLPROP LIMITED, Channel Islands (GB)
(72) Inventor: WILSON, Jeffrey, Hampshire PO16 7OH (GB)
(74) Representative: Pilch, Adam John Michael
(86) International application number: PCT/GB1998/001521
(87) International publication number: WO 1998/054914

(56) References cited:
- CA-A- 2 127 041
- DE-A- 19 616 487
- GB-A- 2 314 994
- US-A- 5 146 491
- US-A- 5 574 781

## Description

This invention relates to telephone systems for providing freephone or toll free services.

Freephone telephone services are now a well understood concept. Whereas generally for a conventional telephone call the calling party pays the full cost of the call, in the case of a freephone number the called party pays for the trunk element of the call or all costs of the call.

In the UK the code 0800 is now well known as a freephone prefix and other codes are also in use, 0500 in the United Kingdom and 1-800 as well as 1-888 in the USA.

The main purpose of a freephone number is to encourage a response from potential customers, as they will be aware that the response call will be free. As such, freephone has been a successful service and in particular is used by many large companies.

In the USA, freephone numbers can be particularly attractive due to the presence of letters on the keys as it is possible to market numbers such as 1800HOTELS1 and 1800MATTRES(S).

The way in which freephone services are implemented varies from country to country, but as the most important customers can potentially generate large numbers of calls the freephone service is often provided by a form of network topology referred to as the Intelligent Network.

Typically, a business wishing to use a freephone number will have contact either by phone or letter with a human agent and they will enter into a contract for either a chosen or given number for a period, with a monthly fee and, of course, an undertaking to pay the telephone company's call charges for the freephone calls received. If the customer is a particularly large user the telephone network will frequently install special lines connected directly or indirectly to its intelligent network freephone system. However, for moderate users of the system a telephone operator will typically use a technique called "delivery to number", wherein the freephone call will be routed to the customer's existing telephone number.

Unlike as in the case of premium rate numbers, where calls result in payments to the subscriber, as it is the subscriber who pays for the calls received there is no incentive to fraud with this latter approach.

There is another form of freephone service, which is offered by many telephone operators, but which is not normally recognised as such. This is in the area of card services, where a telephone operator will offer its customers the opportunity to have additional "phone home" cards.

These are intended primarily for children, in that they allow a child to make a free call using an access code and an account number.

The arrangement is such that the particular account number will result in a free call for the child to the subscriber's home number, with the subscriber accepting responsibility for the call charges.

The advantage of the "phone home" card is that free phone calls to the subscriber's number are limited to those who have knowledge of the account number and if the system also uses an additional PIN number, the PIN number.

The disadvantage of this approach is that when the child wants the make a free call home, they must not only have the card but they must be able to find it. As any parent knows, this could be a fortuitous circumstance.

From the above it can be seen that current systems suffer from three main limitations:
i) the technical solutions are relatively complex and involve human agents in the registration process, therefore restricting the telephone operator's ability to offer lower priced freephone services;
ii) there is no easy mechanism for a small business to easily and cheaply try a freephone service for a limited period; and
iii) there is no scope for offering an effective freephone service which can be turned on and off at will to residential subscribers.

Many parents would like to turn on a residential phone facility for periods when children are away from home. Also, it may be desired to limit the freephone to specific telephones, so that when a child is away at school or college it is possible for a parent to accept freephone calls from one or more specific telephones. This latter facility would also be useful to families with older grandparents who are often concerned about the cost of a call; if they were able to call their children and grandchildren using a freephone number they would also be more likely to remain in touch.

CA-A-2 127 041 discloses an automatic calling service in which a subscriber predefines one or more destination telephone numbers. Calls are made to such destination numbers through a platform that may be reached via a freephone number. The calling party identifies himself by entering a personal identification number and (if there is only one destination number) the call is forwarded to that destination number, or (if there are more destination numbers) the calling party is requested to specify which number is required.

According to the invention there is provided a telephone system comprising:
means for allocating a freephone number; and
means for routing a subsequent call dialled to the allocated freephone number;
characterised in that:
the means for allocating a freephone number is adapted to be responsive to a telephone call requesting allocation of a freephone number corresponding to a specific telephone number in an automated manner; and
the means for routing a subsequent call dialled to the allocated freephone number is operable to route the subsequent call to the specific telephone number.

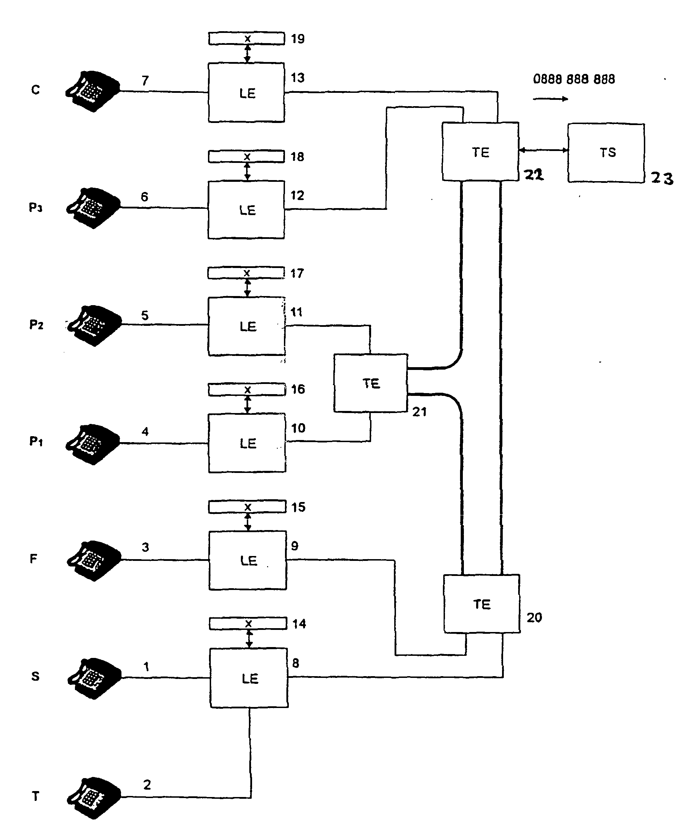

The invention will now be described by way of example with reference to the accompanying single figure drawing which shows a schematic block diagram of a telephone system according to an embodiment of the invention.

The manner in which the preferred automated freephone service operates will now be described.

A subscriber wishing to use the automated freephone service calls a reservation number, for example, 0888 888 888.

This call is routed by the network either directly or indirectly to a telephony server associated with the subscriber's area code. The telephony server interacts with the subscriber to either enable or disable the service and to select or change the service parameters.

In particular, the telephony server may allocate a freephone number, for example 0888 135246, or alternatively, if the network and numbering scheme provide for the eventuality, the subscriber may select a freephone number of the form 0888 followed by their own full telephone number, or again alternatively 0888 and then one or more predefined dialling codes, which may include star and hash and then followed by the subscriber's own full telephone number.

The telephony server, in addition to allowing the subscriber to turn the freephone service on or off at will, also provides for the subscriber to select those telephone numbers and/or area codes for which freephone calls are to be permitted.

When a caller makes a call using this service they will, in the example given, either dial 0888 135246, and in this case the first part of the number following 0888 will be used by the network to route the call to the appropriate telephony server, or alternatively, if the full telephone subscriber number is used the area code will be used to achieve the required routing.

In this way a distributed system suitably dimensioned can be easily provided.

As an alternative, a centrally controlled solution is also possible.

In order to ensure that the subscriber is billed for the automated freephone call the telephony server must provide some form of billing record or billing mechanism.

A billing solution can be provided in a number of ways. One of the simplest solutions is for the telephony server to be collocated with the subscriber's local exchange. The call is then routed directly or indirectly to the telephony server, which then outdials to the subscriber through the local exchange, but with two key differences from a normal local call. Firstly, the calling party's CLI (calling line identity) on the call from the telephony server to the subscriber (via the local exchange) is set to be the subscriber's number such that the exchange billing system will therefore take the call as one from the subscriber and therefore bill the subscriber for it. Secondly, in order to ensure that an appropriate charge is made for the call, the subscriber's number on the outdialled call will be prefixed by a premium rate code in order to force charging to occur at an appropriate level, but for routing purposes the switch will ignore this code.

### Typical Operation

The following assumptions are made:
Service number: 0888 888888
Residential number: 01489 885877
College payphone number: 01329 232329
Subscriber dials registration number 0888 888888 and the following dialogue might typically occur:
   "Welcome to Telco's automated freephone service. This service allows you to set up freephone calls to your telephone. All freephone calls to your telephone number will be charged at the daytime national rate and these charges will be added to your telephone bill."
   "If you wish to proceed press the star key twice now."
   "Thanks.

The following facilities are available.

To disable your existing freephone facility, press zero. (1)

To enable a freephone capability on your telephone, press one.

To add or remove a specific access number for freephone access to your telephone, press two.

To hear full details of all of the automated freephone facilities, press the star key."

### Notes:

1 Only spoken if facility currently enabled.
   If "zero" is pressed the script continues:
      "To confirm cancellation of all automated freephone services press 1.
      To cancel a specific freephone number press 2.
      To return to the menu press the hash key."
   If "one" is pressed the script continues:
      "To select a specific freephone number press 1.
      To accept a network freephone number press 2.
      To return to the menu press the hash key. "
   "One" pressed:
      "To enable your telephone number as an extension to the 0888 free prefix press 1.
      To return to the menu press the hash key."
   "One" pressed:
      "The telephone number 0888 01489 885877 is now a freephone number for your telephone.
      Thanks for using the service". (Disconnects.)

The single figure drawing shows a possible network topology for the automated freephone service.

This simplified network model shows three trunk exchanges 20, 21, 22 and six local exchanges 8 to 13. It also shows a number of telephone handsets 1 to 7 and a telephony server 23. There are also switches 14-19 associated with each of the local exchanges 8 to 13, which are used for automated freephone call routing.

The network operation may be described as follows. Subscriber S makes a telephone call to the automated freephone registration service, for example by dialling 0888 888 888 to the telephony server 23. This telephony server 23 could be a Telsis Hi-Call voice services equipment some aspects of which are described in International Patent Application Publication No. WO92/22165.

The subscriber interacts with the telephony server 23 and enables the required class of automated freephone service.

We will firstly assume that the prefix service is enabled, that is, given that the subscriber's telephone number is 01489 885877 callers dialling 0888 01489 885877 are routed without charge to the subscriber's telephone.

The mechanism by which this occurs is as follows. For a caller on the same local exchange on telephone T an 0888 call is routed to the switch 14, which recognises the 0888 prefix and the local area code 01489. It then routes the call correctly with the appropriate billing action to the subscriber S. For a caller from any other exchange a similar process takes place, with the call routed via the appropriate switch into the trunk network for delivery via the local switch 14 to the subscriber S.

The activation and deactivation of the switch routing may occur in a number of ways, either through data links between one or more telephony servers and the switches or by communication only between the telephony server and the local switch 14. In this latter case the switch configuration can also be achieved by integrating the functions of the telephony server 23 with the local switch 14. With this approach all calls are routed to the appropriate local exchange automated freephone switch, where they are accepted or rejected as appropriate.

In the case of conventional freephone numbers of the form 0888 123 455, these may be allocated and managed by a central telephony server or the numbers may be distributed across combined units incorporating telephony server and automated freephone switching functions.

CLI enabled automated freephone operation may also be provided. A caller would compose the freephone prefix and then dial the appropriate subscriber number. The call would be routed via the local automated freephone switch and its acceptance by the subscriber's local automated freephone switch would be dependent upon CLI match with acceptable CLI categories.

As a further option, it would be possible to PIN-protect any part of the process, such as the original call requesting freephone access and/or the subsequent calls to the freephone number.

The system may be configured to allow access by means of different criteria; for example, if desired, freephone access may only be enabled during predetermined times of day.

## Claims

1. A telephone system comprising:
means (23) for allocating a freephone number; and
means (TE,LE) for routing a subsequent call dialled to the allocated freephone number;
**characterised in that**:
the means (23) for allocating a freephone number is adapted to be responsive to a telephone call requesting allocation of a freephone number corresponding to a specific telephone number in an automated manner; and
the means (TE;LE) for routing a subsequent call dialled to the allocated freephone number is operable to route the subsequent call to the specific telephone number.

2. A telephone system according to claim 1, wherein the means (23) for allocating a freephone number is operable to cancel the freephone number upon subsequent request.

3. A telephone system according to claim 1 or claim 2, wherein the means (TE;LE) for routing subsequent calls is selectively responsive to enable connection to the specific number from only one or more desired numbers and/or area codes entered by the freephone number requesting party.

4. A telephone system according to claim 3, wherein the call routing means (TE;LE) is responsive to the calling line identity signal of a call to the allocated freephone number to enable or refuse access to the specific number.

5. A telephone system according to any one of the preceding claims, wherein the means (23) for allocating a freephone number allows the requesting party to select the freephone number.

6. A telephone system according to claim 5, wherein the selected freephone number may include the specific telephone number.

7. A telephone system according to any one of the preceding claims, wherein at least the number allocating means (23) comprises a telephony server (TS).

8. A telephone system according to claim 7, wherein the telephony server (TS) is associated with a local telephone exchange (LE).

9. A telephone system according to any one of the preceding claims, wherein the number allocating means (23) is responsive to the calling line identity signal of the freephone number requesting call in order to identify the specific telephone number.

10. A telephone system according to any one of the preceding claims, wherein acceptance of the requesting call and/or any subsequent call to the freephone number is conditional on input of a PIN code by the caller.

11. A telephone system according to any one of the preceding claims, including means for charging the cost of any call dialled to the allocated freephone number to the account of the specific telephone number.

## Patentansprüche

1. Telefonsystem, das aufweist:
Einrichtungen (23) für das Zuweisen einer gebührenfreien Telefonnummer und
Einrichtungen (TE, LE) für das Leiten eines nachfolgenden gewählten Anrufs an die zugewiesene gebührenfreie Nummer,
**dadurch gekennzeichnet, daß**:
die Einrichtungen (23) für das Zuweisen einer gebührenfreien Telefonnummer angepaßt sind, so daß sie auf einen Telefonanruf in einer automatisierten Art und Weise reagieren, der die Zuweisung einer gebührenfreien Telefonnummer entsprechend einer spezifischen Telefonnummer anfordert, und
die Einrichtung (TE, LE) für das Leiten eines nachfolgenden gewählten Anrufs zu der zugewiesenen gebührenfreien Telefonnummer betreibbar ist, um den nachfolgenden Anruf zu der spezifischen Telefonnummer zu leiten.

2. Telefonsystem nach Anspruch 1, bei dem die Einrichtungen (23) für das Zuweisen einer gebührenfreien Telefonnummer betreibbar sind, um die gebührenfreie Telefonnummer mit der nachfolgenden Anforderung aufzuheben.

3. Telefonsystem nach Anspruch 1 oder Anspruch 2, bei dem die Einrichtung (TE, LE) für das Leiten von nachfolgenden Anrufen wahlweise reagiert, um die Verbindung mit der spezifischen Nummer von nur einer oder mehreren gewünschten Nummern und/oder Vorwahlcodes, die von der die gebührenfreie Telefonnummer anfragenden Partei eingegeben wird, zu ermöglichen.

4. Telefonsystem nach Anspruch 3, bei dem die Anrufleiteinrichtung (TE, LE) reagiert auf das Anrufleitungsidentitätssignal eines Anrufes an die zugewiesene gebührenfreie Telefonnummer, um den Zugriff auf die spezifische Nummer zu ermöglichen oder abzulehnen.

5. Telefonsystem nach einem der vorherigen Ansprüche, bei dem die Einrichtungen (23) für das Zuweisen einer gebührenfreien Telefonnummer es der anfragenden Partei erlaubt, die gebührenfreie Telefonnummer auszuwählen.

6. Telefonsystem nach Anspruch 5, bei dem die ausgewählte gebührenfreie Telefonnummer die spezifische Telefonnummer beinhalten kann.

7. Telefonsystem nach einem der vorherigen Ansprüche, bei dem zumindest die Nummerzuweisungseinrichtung (23) einen Telefonserver (TS) aufweist.

8. Telefonsystem nach Anspruch 7, bei dem der Telefonserver (TS) mit einer lokalen Telefonvermittlung (LE) verknüpft ist.

9. Telefonsystem nach einem der vorherigen Ansprüche, bei dem die Nummerzuweisungseinrichtung (23) auf das Anrufleitungsidentitätssignal des die gebührenfreie Nummer anfragenden Anrufs reagiert, um die spezifische Telefonnummer zu identifizieren.

10. Telefonsystem nach einem der vorherigen Ansprüche, bei dem das Annehmen des anfragenden Anrufs und/oder jedes nachfolgenden Anrufs für die gebührenfreie Telefonnummer von der Eingabe eines PIN-Codes durch den Anrufer abhängt.

11. Telefonsystem nach einem der vorherigen Ansprüche, das eine Einrichtung aufweist für das Berechnen der Kosten jedes Anrufes, der die zugewiesene gebührenfreie Nummer anruft, zu dem Account der spezifischen Telefonnummer.

## Revendications

1. Système de téléphone comportant :
un moyen (23) destiné à affecter un numéro d'appel gratuit ; et
un moyen (TE, LE) destiné à acheminer un appel subséquent composé pour le numéro d'appel gratuit affecté ;
**caractérisé en ce que** :
le moyen (23) destiné à affecter un numéro d'appel gratuit est conçu pour réagir à un appel téléphonique demandant l'affectation d'un numéro d'appel gratuit correspondant à un numéro de téléphone spécifique d'une manière automatisée ; et
le moyen (TE ; LE) destiné à acheminer un appel subséquent composé pour le numéro d'appel gratuit affecté peut fonctionner de façon à acheminer l'appel subséquent vers le numéro de téléphone spécifique.

2. Système de téléphone selon la revendication 1, dans lequel le moyen (23) destiné à affecter un numéro d'appel gratuit peut fonctionner de façon à annuler le numéro d'appel gratuit lors d'une demande subséquente.

3. Système de téléphone selon la revendication 1 ou la revendication 2, dans lequel le moyen (TE ; LE) destiné à acheminer des appels subséquents réagit sélectivement pour valider une connexion sur le numéro spécifique à partir d'un seul ou de plusieurs numéros souhaités et/ou codes de zone introduits par la partie demandant un numéro d'appel gratuit.

4. Système de téléphone selon la revendication 3, dans lequel le moyen d'acheminement d'appel (TE ; LE) réagit au signal d'identité de ligne appelante d'un appel au numéro d'appel gratuit affecté en autorisant ou refusant l'accès au numéro spécifique.

5. Système de téléphone selon l'une quelconque des revendications précédentes, dans lequel le moyen (23) destiné à affecter le numéro d'appel gratuit permet à la partie demandante de sélectionner le numéro d'appel gratuit.

6. Système de téléphone selon la revendication 5, dans lequel le numéro d'appel gratuit sélectionné peut comprendre le numéro de téléphone spécifique.

7. Système de téléphone selon l'une quelconque des revendications précédentes, dans lequel au moins le moyen (23) d'affectation de numéro comprend un serveur téléphonique (TS).

8. Système de téléphone selon la revendication 7, dans lequel le serveur téléphonique (TS) est associé à un central local (LE).

9. Système de téléphone selon l'une quelconque des revendications précédentes, dans lequel le moyen (23) d'affectation de numéro réagit au signal d'identité de la ligne appelante de l'appel demandant un numéro d'appel gratuit pour identifier le numéro de téléphone spécifique.

10. Système de téléphone selon l'une quelconque des revendications précédentes, dans lequel l'acceptation de l'appel demandant et/ou de tout appel subséquent pour le numéro d'appel gratuit est conditionnée à une entrée d'un code PIN par l'appelant.

11. Système de téléphone selon l'une quelconque des revendications précédentes, comprenant un moyen destiné à imputer le coût de tout appel composé pour le numéro d'appel gratuit affecté sur le compte du numéro de téléphone spécifique.
